# EUROPÄISCHE PATENTSCHRIFT

(11) **EP 2 570 698 B1**
(45) Veröffentlichungstag und Bekanntmachung des Hinweises auf die Patenterteilung: **19.07.2017**
(21) Anmeldenummer: 12178586.9
(22) Anmeldetag: 31.07.2012
(51) Int. Cl.: F16G 1/10, F16G 1/16, F16G 1/28, F16G 5/08, F16G 5/14, F16G 5/20

(54) **Antriebsriemen, insbesondere Keilrippenriemen, mit einer Gewebeauflage**
Drive belt, in particular V-ribbed belt, with a mesh top
Courroie d'entraînement, notamment courroie d'entraînement trapézoïdale crantée, avec revêtement textile

(30) Priorität: 16.09.2011 DE 102011053679
(43) Veröffentlichungstag der Anmeldung: 20.03.2013
(73) Patentinhaber: ContiTech Antriebssysteme GmbH, 30165 Hannover (DE)
(72) Erfinder: Schulte, Hermann, 30823 Garbsen (DE); Finzelberg, Jan, 30159 Hannover (DE); Baltes, Thomas, 30177 Hannover (DE); Kanzow, Henning, 30419 Hannover (DE); Moses, Reinhold, 37632 Eimen (DE)
(74) Vertreter: Preusser, Andrea

(56) Entgegenhaltungen:
- EP-A1- 0 271 587
- EP-A1- 0 905 411
- WO-A1-03/031700
- DE-A1-102008 037 415

## Beschreibung

Die Erfindung betrifft einen Antriebsriemen mit einem elastischen Grundkörper auf der Basis eines Vulkanisats, umfassend eine Decklage als Riemenrücken und einen Unterbau mit einer Kraftübertragungszone, wobei die Kraftübertragungszone mit einer Gewebeauflage versehen ist, die aus Kettfäden und Schussfäden gebildet ist.

Antriebsriemen, die auch als Kraftübertragungsriemen bezeichnet werden und im Funktionszustand zumeist endlos geschlossen sind, können als Flachriemen, Keilriemen, Keilrippenriemen, Zahnriemen und Kupplungsriemen ausgebildet sein. Besonders erwähnenswert ist hierbei der Keilrippenriemen, der vielfach in der Patentliteratur beschrieben wird. So zum Beispiel in DE 38 23 157 A1, DE 100 16 351 A1, DE 10 2006 007 509 A1, EP 0 590 423 A2, EP 0 737 228 B1, EP 0 831 247 B1, EP 0 866 834 B1, EP 1 108 750 A1, EP 1 129 308 B1 und US 3,981,206.

Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere (TPE) zu nennen sind. Von besonderer Bedeutung sind Elastomere auf der Basis einer vulkanisierten Kautschukmischung.

Der elastische Grundkörper ist ferner zumeist noch mit einem eingebetteten Festigkeitsträger bzw. Zugträger versehen, der ein- oder mehrlagig ausgeführt sein kann.

Antriebsriemen können zur Geräuschreduzierung wie auch zur Erhöhung der Abriebsbeständigkeit im Bereich der Kraftübertragungszone mit einer Beschichtung versehen werden. So ist beispielsweise aus DE 100 16 351 A1 oder aus DE 38 23 157 A1 eine Flockauflage, insbesondere in Form eines Baumwoll- oder Aramidflockes, oder eine dünne mit Fasern (z.B. Armidfasern) gefüllte elastische Polymerschicht bekannt, wobei die Anhaftung der Flockauflage zumeist mittels einer Sprühlösung erfolgt. Bei manchen Motoren wirkt jedoch diese Beschichtung nicht dauerhaft. Außerdem treten hier bei manchen Motoren Geräuschprobleme bei Feuchtigkeit auf.

Bei einem Keilrippenriemen-Trieb mit entkoppelter Kurbelwellenscheibe wird bereits versucht, als Alternative zu der oben genannten Flockbeschichtung eine Textilauflage insbesondere auf der Basis von Baumwollgestricken zu verwenden. Durch Verschleiß, welcher bereits nach wenigen tausend Kilometern auftritt, verliert sich dabei allerdings die Geräusch dämmende Funktion. Vielfach zeigen sich bereits von Anfang an Geräusche, da aufgrund von Vulkanisatdurchtritt durch die Maschen die Reibung zu hoch ist. Andere Gestricke verschleißen zu schnell und zeigen dann ebenfalls nach einigen tausend Kilometern Geräusche.
Ein Beispiel für eine gestrickte Textilauflage findet sich beispielsweise in US 3,981,206, wobei sich gezeigt hat, dass hierbei auf Prüfmotoren beim Startvorgang Geräusche entstehen.
Eine Textilauflage in Form eines Gewirkes ist zum Beispiel aus WO2007093473A1 bekannt. Die Kettwirkware besteht dabei aus einem ersten Garn, insbesondere aus einem Polyamid (PA) oder Polyester (PES), und einem zweiten Garn, insbesondere aus einem Polyurethan (PU). Nachteilig ist hier, dass auf Prüfmotoren bei Feuchtigkeit ebenfalls Geräusche entstehen.
Ebenso sind bidirektionale Gewebe, Gestricke oder Gewirke möglich und zum Beispiel in US 6,491,598 beschrieben.
In DE 10 2007 062 285 A1 wird ein Zahnriemen mit schussbetonter Gewebeauflage beschrieben. Nachteilig ist, dass das Schussgarn zwei Funktionen hat. So werden Verschleißschutz und Festigkeit in Riemenlängsrichtung allein durch das Schussgarn gewährleistet. Nach Verschleiß des Schussgarns ist auch die Festigkeit in Riemenlängsrichtung nicht mehr vorhanden.
Bei Zahnriemen werden üblicherweise Polyamid-Gewebe eingesetzt, bei denen das Schussgarn texturiert ist und daher dehnbar ist. Diese Gewebe werden mit der dehnbaren Schussrichtung in Riemenlängsrichtung aufgelegt. Bei Gummizahnriemen sind diese Gewebe zumeist mit einem Haftmittel auf RFL-Basis ausgerüstet. Bei Polyurethanriemen werden auch unpräparierte Gewebe eingesetzt.

Es können auch Gewebe eingesetzt werden, wobei die Garne des Gewebes teilweise mit Fluorpolymer (z. Bsp. PTFE) behandelt sind oder aus diesem bestehen, siehe zum Beispiel DE 602 19 337 T2. Hierbei wird allerdings die Geräuschreduzierung nicht thematisiert, da der Fokus bei der Verwendung von PTFE-Garnen auf der Minderung des Reibbeiwertes liegt.

In DE 10 2008 037 415 A1 wird zur Vermeidung des Vulkanisatdurchtritts vorgeschlagen, die Textilauflage anzuschleifen. Es hat sich aber gezeigt, dass das Anschleifen keinen ausreichenden Schutz vor dem Austreten des Vulkanisats und der sich daraus ergebenden stärkeren Geräuschbildung bietet.

Es gibt aber auch die Möglichkeit, anstelle der Textilauflagen oder in Kombination mit diesen eine Folie (z.B. PTFE-Folie) oder ein Folienverbund (z.B. PA-PTFE-Folienverbund) einzusetzen, insbesondere unter dem Aspekt der ölbeständigen Ausrüstung eines Antriebsriemens. Dies wird beispielsweise in DE 10 2008 012 044 A1 vorgeschlagen. Hierbei wird in der Regel die Geräuschreduzierung nicht ausreichend beachtet.

Letztlich offenbart WO 03/031700 A1 einen Antriebsriemen gemäß dem Oberbegriff des Anspruchs 1. Die Aufgabe der vorliegenden Erfindung ist es daher, einen Antriebsriemen, insbesondere einen Keilrippenriemen, bereitzustellen, der sich durch eine optimierte Reduzierung der Laufgeräusche und ein verbessertes Verschleißschutzverhalten der Lauffläche, insbesondere bei hohem Schlupf, auszeichnet. Des Weiteren soll ein Austritt von Vulkanisat durch die Oberfläche der textilen Auflage, hier ein Gewebe, vermieden oder zumindest reduziert werden. Letzteres ist häufig auch ein optisches Problem und bei Kunden unerwünscht.

Gelöst wird diese Aufgabe dadurch, dass der Antriebsriemen eine Kraftübertragungszone besitzt, welche mit einem Gewebe versehen ist, das eine geschlossene Oberflächenstruktur aufweist und Kett- und Schussfäden enthält, wobei die Kettfäden und / oder die Schussfäden durch wenigstens ein Falschdrahtverfahren texturiert sind.

Durch die Verwendung von Kett- und / oder Schussfäden, welche mit wenigstens einem Falschdrahtverfahren texturiert sind, lässt sich eine besonders gute geschlossene Oberflächenstruktur erzielen, welche für eine trockene, vulkanisatfreie und reibungsoptimierte Riemenoberfläche sorgt. Geschlossene Oberflächenstruktur bedeutet, dass die Oberfläche nicht offenporig ist. Im Vergleich zu der bereits erwähnten DE 10 2008 037 415 A1 ergeben sich durch Verwendung von mit wenigstens einem Falschdrahtverfahren texturierten Kett- und / oder Schussfäden eine deutlich verringerte Offenporigkeit und dadurch eine verstärkte Geräuschreduzierung und einen signifikant verringerten Vulkanisataustritt.
Hierdurch wird auch dem Aspekt des Schlupfverhaltens zur Erzielung eines optimalen Schlupf/Leistungsverhaltens in Bezug auf eine Reibungsoptimierung Rechnung getragen, da ein verstärkter Vulkanisatdurchtritt durch die Gewebeauflage einen erhöhten Reibbeiwert zur Folge hat.
Der Vulkanisatdurchtritt bzw. Mischungsdurchtritt erfolgt in der Regel relativ ungesteuert, wodurch CoF-Werte (Coefficient of Friction, Reibbeiwert) von verschiedenen Riemen schwanken und daher zu hohe CoF-Werte auftreten können, die wiederum Geräusche verursachen können. Ein hoher Vulkanisatdurchtritt durch die Gewebeauflage und somit ein hoher Vulkanisatanteil an der Riemenoberfläche entspricht einem erhöhten CoF-Wert ≥ 1,3.
Die Ermittlung des CoF-Wertes erfolgte nach der SAE J2432, Kapitel 12, Seiten 17 bis 23. Die angegebenen CoF-Werte beziehen sich auf den trockenen Zustand.

Die Reduzierung des Vulkanisataustritts, d.h. eine optimierte geschlossene Oberflächenstruktur wird dadurch gewährleistet, dass die Kett- und / oder Schussfäden, mit wenigstens einem Falschdrahtverfahren texturiert sind.

Die Texturierung ist eine bekannte Bezeichnung aus der Textilchemie, unter der man die Erzeugung einer speziellen Faser-Textur durch maschinelle Behandlung von thermoplastischen Chemiefasern versteht. Sie wird hauptsächlich für die Herstellung von Garnen für die Bekleidungsindustrie und von Teppichen verwendet. Die Texturierung soll den Fasern eine bessere Haftung im Gespinstverband (hier im Gewebe), eine erhöhte mechanische Beanspruchbarkeit, einen volleren Griff, d. h. ein größeres Volumen und Bauschigkeit, sowie den daraus hergestellten Textilien eine höhere Elastizität und besseres Wärmeisolierungsvermögen verleihen. Hinsichtlich Details der Texturierung wird auf Chemielexikon Römpp Online, Version 3.14, verwiesen.
Überraschenderweise hat sich gezeigt, dass sich texturierte Garne, welche mit wenigstens einem Falschdrahtverfahren texturiert wurden, besonders gut als Textilauflage bzw. Gewebeauflage eines Antriebsriemens eignen, da sich eine besonders gute geschlossene Oberfläche bieten.
Mittlerweile existieren verschiedene Modifizierungen des Falschdrahtverfahrens, beispielsweise in WO 2005/087987A2 oder auch in DE 694 07 796 T2 beschrieben, wobei allen gemein ist, dass der Faden im Durchlauf mit einer bestimmten Drehungszahl (z.Bsp. 2000 bis 3000 Drehungen/m) versehen wird und in diesem Zustand heiß fixiert wird. Nach dem Zurückdrehen bleibt dann in den einzelnen Filamenten die einfixierte Spiralstruktur erhalten.
Das Kett- und / oder Schußgarn kann mit allen bekannten Falschdrahtverfahren texturiert sein.
In einer besonders bevorzugten Variante ist lediglich das Schußgarn des Gewebes mit wenigstens einem Falschdrahtverfahren texturiert.
Bevorzugt ist es ebenso, wenn die Kettfäden des Gewebes parallel zur Laufrichtung des Antriebsriemens verlaufen.

Zweckmäßig ist es, wenn das Gewebe weniger als 5% Elastofasern, wie Elastanen oder Elastodienen, enthält. Es ist aber auch möglich, dass das Gewebe frei von Elastofasern ist. Die Verwendung von größeren Mengen Elastofasern hat sich aufgrund der geringen thermischen Stabilität als nicht oder nur bedingt geeignet erwiesen.
Als Materialien für das Gewebe, sowohl für Kette als auch für Schuß, haben sich thermoplastische Elastomere, wie beispielsweise Polyamide , bevorzugt Nylon 6.6 oder Nylon 6, Polyester, wie bspw. Polyethylenteraphthalat und Polyphenylensulfide, als besonders geeignet gezeigt. Diese können alleine oder in Kombination verwendet werden. Die Zugfestigkeit des Garns beträgt vorzugsweise 30 bis 80 cN/Tex.

In einer besonders bevorzugten Ausführungsvariante hat das Gewebe eine Kette mit einer Dehnung von 5 bis 100%, bevorzugt 10 bis 70%, besonders bevorzugt 20 bis 50 %, bei einer Kraft von 2kg und einer Breite von 25mm und einen Schuß mit einer Dehnung von 40 bis 200%, bevorzugt von 60 bis 150%, besonders bevorzugt von 75 bis 150% und ganz besonders bevorzugt von 75 bis 120%, bei einer Kraft von 2kg und einer Breite von 25mm. Die Dehnung wurde hierbei an einer Probe mit 10 cm Länge und 25 mm Breite mittels einem Instron-Zugversuch mit einer 1kN Messzelle und einer Zuggeschwindigkeit von 500mm/min bestimmt.
Die Dichte des Gewebes beträgt vorzugsweise 50 bis 600 g/m², besonders bevorzugt 150 bis 250 g/m².
Die Luftdurchlässigkeit des Gewebes liegt vorteilhafterweise im Bereich von 15 bis 100m³/m²/min, bevorzugt im Bereich von 15 bis 91 m³/m²/min, bestimmt mittels der Luftdurchlässigkeitsmethode nach Frazier.
Für die Luftdurchlässigkeit ist es weiterhin vorteilhaft, wenn das Gewebe 50 bis 150 Kettfäden pro 15mm und / oder 30 bis 100 Schußfäden pro 15mm besitzt.

Das Gewebe hat in einer vorteilhaften Ausgestaltung einen CoF-Wert kleiner 1,3, bevorzugt zwischen 0,8 und 1,2.
Dadurch kann das Schlupf/Leistungsverhaltens, insbesondere für Dieselmotoren, optimiert werden. Dieses Verhalten kann durch einen optimierten CoF-Wertes zwischen Riemen und Scheibe eingestellt werden, wobei für manche Dieselmotoren ein CoF-Wert von < 1,1 verlangt wird. Dies ist mit einem modifizierten Gewebe bei einem CoF-Wert von 0,8 bis 1,2 realisierbar.

Das Gewebe kann zusätzlich auf der dem Unterbau zugewandten Seite mit einem Haftmittel versehen sein. Auch kann es mit einer Polymerlösung getränkt sein, insbesondere unter dem Aspekt der Veränderung des CoF-Wertes. Vorteilhaft ist hier auch die Verwendung einer Polymerschicht, insbesondere einer Polymerfolie, wobei diese bevorzugt auf Basis von Polyethylen ist.

Das Haftmittel und/oder die Polymerlösung kann zudem noch ein Trockenschmiermittel enthalten, und zwar bei der Polymerlösung insbesondere zur der Senkung des CoF-Wertes. Das Trockenschmiermittel ist vorzugsweise ein Fluorkunststoff, wie beispielsweise Polytetrafluorethylen (PTFE) und / oder Polyvinylfluorid (PVF) und / oder Polyvinylidenfluorid (PVDF), wobei insbesondere Polytetrafluorethylen (PTFE) zu nennen ist.

Das Gewebe und/oder das Haftmittel und/oder die Polymerlösung kann/können ferner elektrisch leitfähig ausgeführt sein, insbesondere auf der Basis von Ruß und/oder Graphit und/oder eines Metallzusatzes. Von besonderer Bedeutung ist dabei der Einsatz eines elektrisch leitfähigen Rußes.

Hinsichtlich vorteilhafter Vulkanisate auf der Basis von Kautschukmischungen wird im Rahmen der Figurenbeschreibung noch näher eingegangen.

Die Erfindung wird nun anhand eines Ausführungsbeispieles unter Bezugnahme auf eine schematische Querschnittsdarstellung beschrieben.

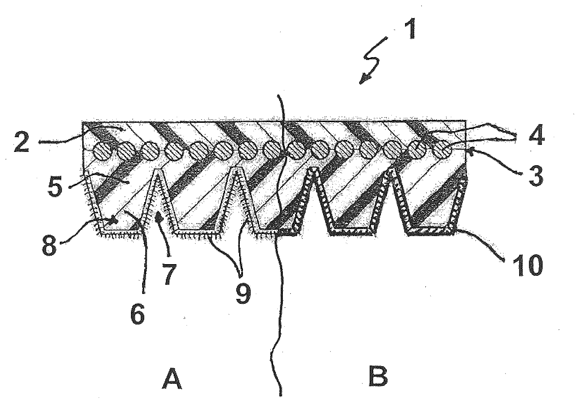

Die einzige Figur zeigt einen Antriebsriemen 1 in Form eines Keilrippenriemens mit einer Decklage 2 als Riemenrücken, einer Festigkeitsträgerlage 3 mit in Längsrichtung verlaufenden parallel angeordneten Zugträgern 4 sowie mit einem Unterbau 5. Der Unterbau weist eine Keilrippenstruktur auf, gebildet aus Rippen 6 und Rillen 7. Der Unterbau umfasst dabei die Kraftübertragungszone 8.

Die Decklage 2 und der Unterbau 5 bilden dabei als Gesamteinheit den elastischen Grundkörper auf der Basis eines thermoplastischen Elastomers oder auf der Basis eines Vulkanisates, insbesondere in Form einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR),
Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Die Zugträger 4 sind insbesondere Einzelcorde, beispielsweise aus Stahl, Polyamid, Aramid, Polyester, Glasfasern, Polyetheretherketon (PEEK) oder Polethylen-2,6-naphthalat (PEN).

Innerhalb der Kraftübertragungszone 8 ist der Antriebsriemen 1 nach dem Stand der Technik mit einer Flockauflage 9 (Abschnitt A) versehen.

Im Vergleich hierzu weist der erfindungsgemäße Antriebsriemen 1 innerhalb seiner Kraftübertragungszone 8 das erfindungsgemäße Gewebe 10 (Abschnitt B) auf, und zwar unter dem Aspekt einer optimierten geschlossenen Oberflächenstruktur, die den Durchtritt des Vulkanisates, beispielsweise auf Basis EPDM, verhindert.

Die Decklage 2 des Antriebsriemens 1 kann unbeschichtet sein. Häufig wird auch diese Decklage mit einer Beschichtung versehen. Zumeist genügt dabei eine Beschichtung nach dem Stand der Technik. Diesbezüglich wird auf die Beschreibungseinleitung verwiesen.

Die Decklage 2 kann jedoch auch mit dem neuen modifizierten Gewebe ausgestattet sein, was jedoch im Gegensatz zur Kraftübertragungszone 8 nicht unbedingt erforderlich ist.

Das erfindungsgemäße Gewebe 10 sowie eine gegebenenfalls eingesetzte Beschichtung für die Decklage 2 kann zudem ölbeständig ausgerüstet sein.

Auch wenn das neue erfindungsgemäße Gewebe vorrangig für Keilrippenriemen zum Einsatz gelangt, so können hiermit auch andere Formen von Antriebsriemen ausgestattet werden. Zu nennen ist hier wiederum insbesondere der Kupplungsriemen, beispielsweise ein Kupplungsriemen für UMKR Rasenmäherantriebsriemen.

Handelt es sich bei dem Kraftübertragungsriemen um einen Keilrippenriemen, so hat dieser hierbei bevorzugt ein PK-Profil gemäß DIN 7867, insbesondere mit einer Rippenhöhe von 1,7 bis 2,5 mm, bevorzugt von1,9 bis 2,3 mm.

### Bezugszeichenliste

### (Teil der Beschreibung)

- 1: Antriebsriemen (Keilrippenriemen)
- 2: Decklage (Riemenrücken)
- 3: Festigkeitsträgerlage
- 4: Zugträger in Form von Einzelkorden
- 5: Unterbau
- 6: Rippen
- 7: Rillen
- 8: Kraftübertragungszone
- 9: Flockauflage (Abschnitt A)
- 10: Gewebe (Abschnitt B)

## Patentansprüche

1. Antriebsriemen (1) mit einem elastischen Grundkörper auf der Basis wenigstens eines thermoplastischen Elastomers oder auf der Basis eines Vulkanisats, umfassend eine Decklage (2) als Riemenrücken und einen Unterbau (5) mit einer Kraftübertragungszone (8), wobei die Kraftübertragungszone mit einem Gewebe (10) versehen ist, welches eine geschlossene Oberflächenstruktur aufweist und welches Kett- und Schussfäden enthält, wobei die Kettfäden und / oder die Schussfäden durch wenigstens ein Falschdrahtverfahren texturiert sind, wobei das Gewebe (10) auf ihrer dem Unterbau zugewandten Seite mit einem Haftmittel versehen ist, wobei das Haftmittel eine Polymerschicht ist, und wobei das Gewebe (10) mit einer Polymerlösung getränkt ist, **dadurch gekennzeichnet, dass** das Haftmittel und / oder die Polymerlösung einen Fluorkunststoff als Trockenschmiermittel enthält.

2. Antriebsriemen nach Anspruch 1, **dadurch gekennzeichnet, dass** das Gewebe (10) und/oder das Haftmittel nach Anspruch 5 und/oder die Polymerlösung nach Anspruch 6 elektrisch leitfähig ausgeführt ist/sind.

3. Antriebsriemen nach einem der Ansprüche 1 bis 2, **dadurch gekennzeichnet, dass** der elastische Grundkörper ein Vulkanisat auf der Basis einer vulkanisierten Kautschukmischung ist, enthaltend wenigstens eine Kautschukkomponente und Mischungsingredienzien.

4. Antriebsriemen nach Anspruch 3, **dadurch gekennzeichnet, dass** die Kautschukkomponente ausgewählt ist aus der Gruppe, enthaltend Ethylen-Propylen-Mischpolymerisat (EPM) und / oder Ethylen-Propylen-Dien-Mischpolymerisat (EPDM) und / oder (teil)hydrierter Nitrilkautschuk (HNBR) und / oder Chloropren-Kautschuk (CR), und / oder Fluor-Kautschuk (FKM) und / oder Naturkautschuk (NR) und / oder Styrol-Butadien-Kautschuk (SBR) und / oder Butadien-Kautschuk (BR).

5. Antriebsriemen nach einem der Ansprüche 1 bis 4, **dadurch gekennzeichnet, dass** der Antriebsriemen (1) als Keilrippenriemen ausgebildet ist.

6. Antriebsriemen nach einem der Ansprüche 1 bis 5, **dadurch gekennzeichnet, dass** die Kettfäden des Gewebes (10) parallel zur Laufrichtung des Antriebsriemens verlaufen.

## Claims

1. Drive belt (1) having an elastic main body based on at least one thermoplastic elastomer or based on a vulcanizate, comprising a cover ply (2) as belt spine and a substructure (5) having a force transmission zone (8), wherein the force transmission zone is provided a woven fabric (10) which has an uninterrupted surface structure and which contains warp and weft threads, wherein the warp threads and/or the weft threads are textured as a result of at least one false twist process, wherein the woven fabric (10) is provided an adhesion promoter on its substructure-facing side, wherein the adhesion promoter is a polymer layer, and wherein the woven fabric (10) has been impregnated with a polymer solution, **characterized in that** the adhesion promoter and/or the polymer solution contains a fluoropolymer as dry lubricant.

2. Drive belt according to Claim 1, **characterized in that** the woven fabric (10) and/or the adhesion promoter according to Claim 5 and/or the polymer solution according to Claim 6 are/is electrically conductive.

3. Drive belt according to any one of Claims 1 and 2, **characterized in that** the elastic main body is a vulcanizate based on a vulcanized rubber mixture containing at least one rubber component and mixture ingredients.

4. Drive belt according to Claim 3, **characterized in that** the rubber component is selected from the group containing ethylene-propylene copolymer (EPM) and/or ethylene-propylene-diene copolymer (EPDM) and/or (partially) hydrogenated nitrile rubber (HNBR) and/or chloroprene rubber (CR) and/or fluororubber (FKM) and/or natural rubber (NR) and/or styrene-butadiene rubber (SBR) and/or butadiene rubber (BR).

5. Drive belt according to any one of Claims 1 to 4, **characterized in that** the drive belt (1) is configured as a V-ribbed belt.

6. Drive belt according to any one of Claims 1 to 5, **characterized in that** the warp threads of the woven fabric (10) run parallel to the running direction of the drive belt.

## Revendications

1. Courroie d'entraînement (1) avec un corps de base élastique conçu sur la base d'au moins un élastomère thermoplastique ou sur la base d'un produit de vulcanisation, comprenant une couche de revêtement (2), laquelle se présente sous la forme d'un revêtement dorsal de la courroie, et une structure inférieure (5) avec une zone de transmission de la force (8), selon laquelle la zone de transmission de la force est pourvue d'un tissu (10), lequel présente une structure fermée de sa surface et lequel contient des fils de chaîne et des fils de trame, selon laquelle les fils de chaîne et/ou les fils de trame sont texturés par l'intermédiaire d'au moins un procédé de fausse torsion, selon laquelle le tissu (10) est pourvu d'un agent adhésif sur la face qui est tournée vers la structure inférieure, selon laquelle l'agent adhésif est une couche de polymère et selon laquelle le tissu (10) est imprégné d'une solution de polymère, **caractérisée en ce que** l'agent adhésif et/ou la solution de polymère contient une matière plastique fluorée qui se présente sous la forme d'un lubrifiant sec.

2. Courroie d'entraînement selon la revendication 1, **caractérisée en ce que** le tissu (10) et/ou l'agent adhésif est (sont) réalisé(s) selon la revendication 5 et/ou la solution de polymère est (sont) réalisé(s) de manière électriquement conductrice selon la revendication 6.

3. Courroie d'entraînement selon l'une des revendications 1 à 2, **caractérisée en ce que** le corps de base élastique est un produit de vulcanisation conçu sur la base d'un mélange de caoutchouc vulcanisé, contenant au moins un composant en caoutchouc et des ingrédients de mélange.

4. Courroie d'entraînement selon la revendication 3, **caractérisée en ce que** le composant en caoutchouc est sélectionné à partir du groupe constitué par le produit de polymérisation mélangé de propylènes et d'éthylènes (EPM) et/ou le produit de polymérisation mélangé d'éthylènes, de propylènes et de diène (EPDM) et/ou par le caoutchouc nitrile (en partie) hydrogéné (HNBR) et/ou le caoutchouc chloroprène (CR), et/ou le caoutchouc fluoré (FKM) et/ou le caoutchouc naturel (NR) et/ou le caoutchouc de styrène et de butadiène (SBR) et/ou le caoutchouc de butadiène (BR).

5. Courroie d'entraînement selon l'une des revendications 1 à 4, **caractérisée en ce que** la courroie d'entraînement (1) est conçue sous la forme d'une courroie trapézoïdale à nervures.

6. Courroie d'entraînement selon l'une des revendications 1 à 5, **caractérisée en ce que** les fils de chaîne du tissus (10) sont acheminés parallèlement à la direction de circulation de la courroie d'entraînement.
